# EUROPEAN PATENT APPLICATION

(11) **EP 4 597 197 A2**
(43) Date of publication of application: **06.08.2025**
(21) Application number: 25183052.7
(22) Date of filing: 06.07.2023
(51) Int. Cl.: G02B 21/24

(54) **MOBILE LASER SCANNING MICROSCOPE AND BEAM STABILIZER FOR LASER SCANNING MICROSCOPE**

(30) Priority: 09.07.2022 HU 2200259; 09.11.2022 HU 2200444
(62) Divisional of application: 23787181.9
(71) Applicant: Femtonics Kft., 1087 Budapest (HU)
(72) Inventor: The designation of the inventor has not yet been filed
(74) Representative: Kacsuk, Zsófia

(57) **Abstract**

The invention relates to a mobile laser scanning microscope (100) comprising:
a chassis (10) with rollers (12),
an optical table (30) connected to the chassis (10) via a vibration damper (20),
an upper optical box (40) containing a scanning head (42) with acousto-optical deflectors,
a pillar (60) connecting the upper optical box (40) to the optical table (30) and holding it at a distance above therefrom,
a stage (31) arranged on the optical table (30),
a microscope module (32) arranged above the stage (31) and comprising a microscope objective (33) optically coupled to the scanning head (42) and at least one detector (75a, 75b),
at least one laser (35) arranged on the optical table (30),
an optical beam path (36) guiding a beam of the at least one laser (35) from the at least one laser (35) through the upper optical box (40) to the objective (33),
compartments (17) connected to the chassis (10) below the optical table (30) and housing power supplies (15) and control systems (16) of the microscope (100), and
a light barrier system (50) having a cover (52) covering units arranged on the optical table (30).

## Description

The invention relates to a beam stabiliser for a scanning microscope comprising a first and a second laser, in particular for a mobile laser scanning microscope.

State of the art two- or three-dimensional laser scanning microscopes with acousto-optical deflectors are typically assembled on a large optical table, where each optical and electro-optical element is individually mounted and aligned, which requires a lot of time (up to weeks) and considerable expertise. Not only is the assembled microscope setup not transportable due to its size, but the adjustments to the position and angle of the elements, which require considerable fine-tuning, could be damaged by moving the system. Consequently, high-precision laser scanning microscopes cannot be transported once assembled, nor can they be moved from one laboratory room to another without disassembling and reassembling the microscope elements.

The aim of the invention is also to create a beam stabilizer for a laser scanning microscope with two lasers, in particular for mobile scanning microscopes, that can simultaneously stabilize two laser beams from different lasers for a common scanning head.

The inventors recognized that by properly stabilizing the optical table and the optical beam used for scanning, and by properly arranging the parts and auxiliary units of the laser scanning microscope in space, a compact design can be achieved that can be integrated into a frame with rollers, and thus moved and transported in an assembled state. Thanks to the compact design, the microscope assembly can be moved through a standard-sized door (e.g. 70 x 200 cm).

Based on the above recognition, the problem was solved beam stabilizer according to claim 1.

Further details of the invention will be explained by way of exemplary embodiments with reference to the figures, wherein
Figure 1 is a front perspective view of a first embodiment of a microscope comprising a beam stabilizer according to the invention with the cover removed;
Figure 2 is a rear perspective view of the embodiment shown in Figure 1 with the cover removed;
Figure 3 is a side view of the embodiment shown in Figure 1;
Figure 4 is a front view of the embodiment shown in Figure 1;
Figure 5 is another side view of the embodiment shown in Figure 1;
Figure 6 is an enlarged detail of the embodiment shown in Figure 1;
Figure 7 is an exploded view of the embodiment shown in Figure 1 with the cover;
Figure 8 is a perspective bottom view of the elements connected to the chassis of the embodiment shown in Figure 1;
Figure 9 is a schematic view illustrating the arrangement of the optical table of the microscope;
Figure 10 is a schematic view illustrating the arrangement of the elements between the chassis and the optical table;
Figure 11 is a schematic view illustrating the main units of the microscope;
Figure 12 is a schematic view illustrating the light barrier around the cable duct;
Figure 13 is a block diagram of the optical arrangement;
Figure 14 is an enlarged block diagram of the reference beam path of the beam stabilizer.

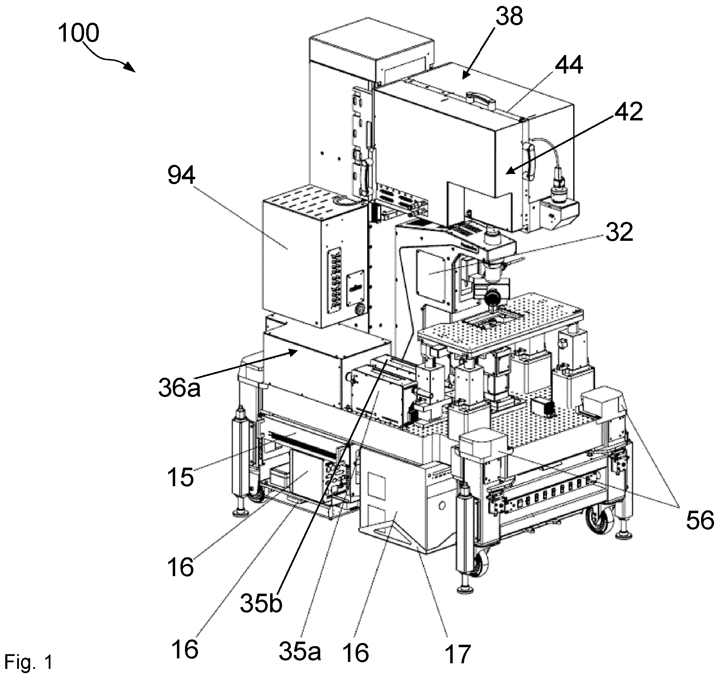

Figure 1 shows a perspective front view of a first embodiment of a mobile laser scanning microscope 100 with a cover 52 removed. The microscope 100 can be divided mechanically and functionally into six main units, which are: chassis 10, optical table 30, supporting and bracing pillar 60, upper optical box 40, stage 31, microscope module 32.

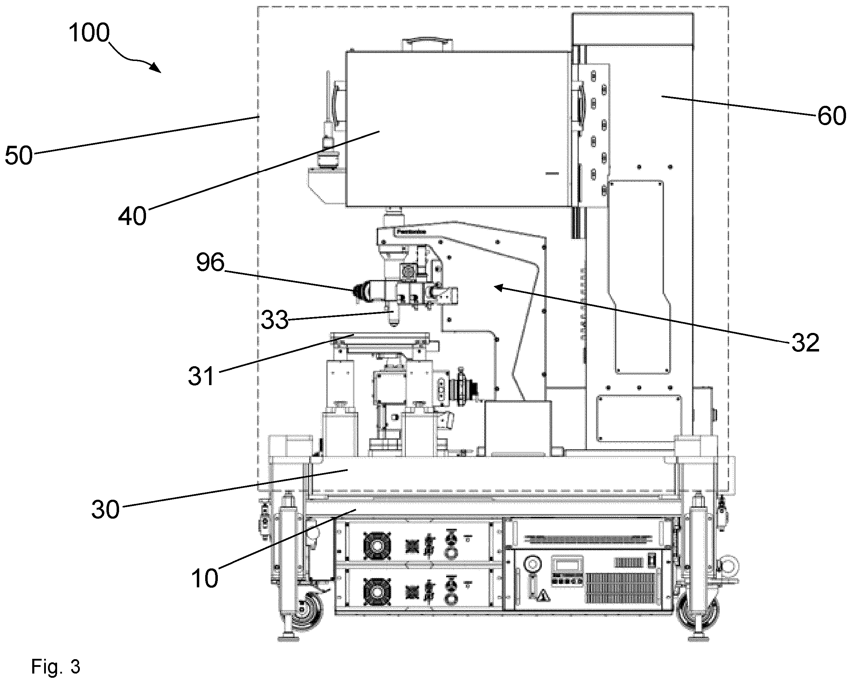

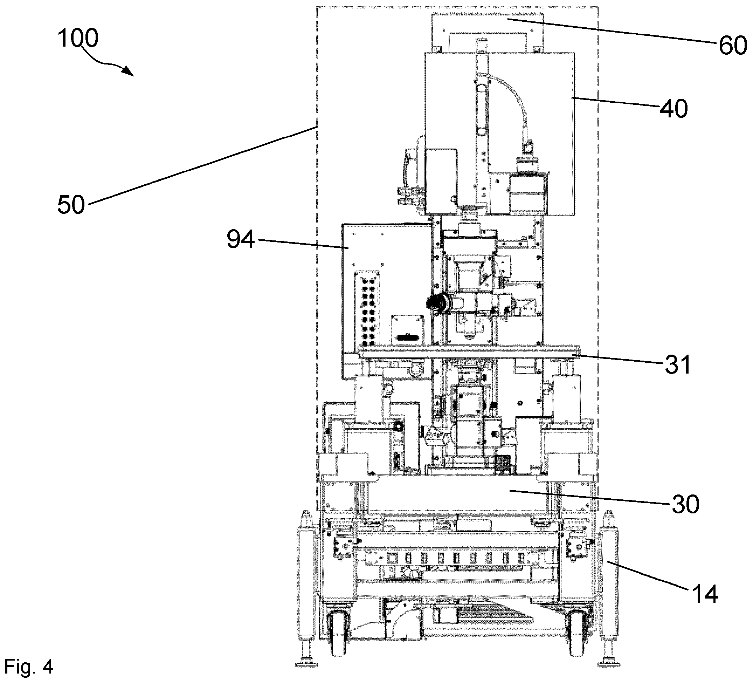

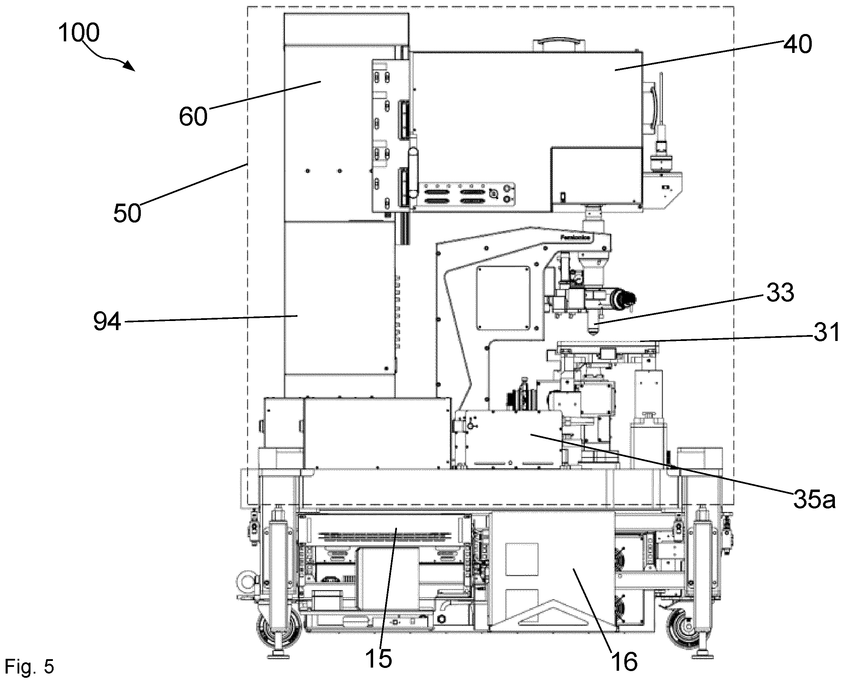

The chassis 10 is the basis for the microscope 100, which has several functions. The chassis 10 is responsible for supporting the entire weight of the microscope 100 by means of support legs 14 standing on the ground, so the microscope does not require a separate table. In an advantageous embodiment, the legs 14 attached to the chassis 10 comprise two leg parts that can be moved relative to each other, allowing the length of the legs 14 to be varied. For example, the leg part in contact with the ground can be telescopically screwed into the other leg part. The microscope 100 also includes rollers 12 attached to the chassis 10, the rollers 12 being lifted from the ground by the legs 14 in a default position, so that the rollers 12 are not in contact with the ground. Such a chassis 10 with adjustable support legs 14 and rollers 12 is shown, for example, in the embodiments shown in Figures 1-5 and Figures 7-8. By shortening the legs 14 (e.g., by screwing one leg part into the other leg part), the rollers 12 can be brought into contact with the ground such that the weight of the microscope 100 rests on the rollers 12, making the microscope 100 movable on the rollers 12. In other words, the mobility and easy movability of the whole system is preferably provided by the rollers 12, which support the weight of the structure and make it rollable when the adjustable legs 14 are adjusted to be shorter than the rollers 12. In the default arrangement, the two parts of the legs 14 are simply screwed together until they are shorter than the rollers 12. During operation, the rollers 12 do not touch the ground, the microscope 100 stands on its extended legs 14, which are adjusted to the same height by levelling during adjustment.

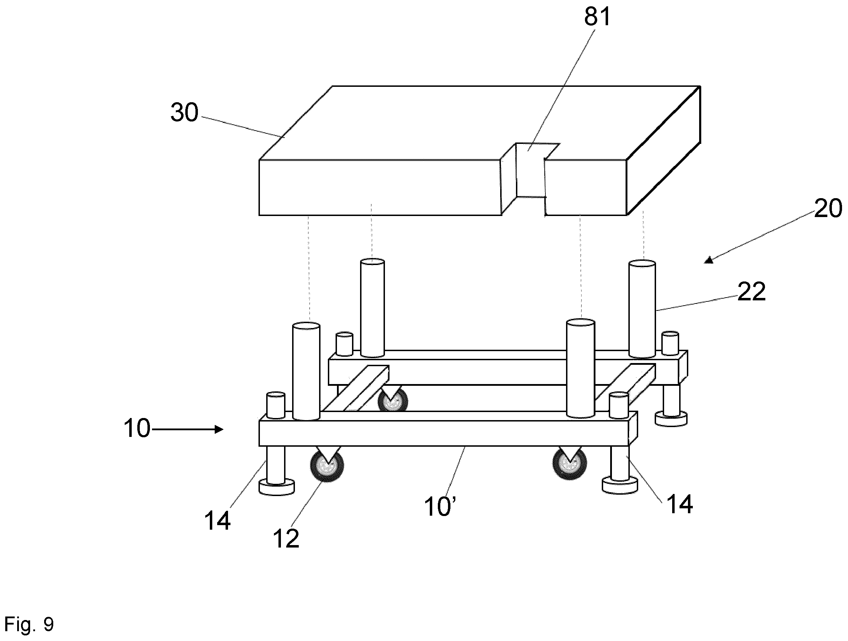

An additional function of the chassis 10 is that it directly supports the mechanical vibration generating elements of the microscope 100, e.g. power supply units 15 with cooling elements, fans, etc., or control systems 16 with fans and other heavier elements. The central element of the chassis 10 is a robust welded frame 10', as can be seen in Figures 9-11, which is supported on the ground during operation of the microscope 100 by legs 14 provided with preferably rubber pads. The frame 10' supports the weight of the microscope 100 and provides mechanical stability. However, the mechanical vibrations from the ground and the vibrations generated in the equipment placed thereon are not absorbed by the chassis 10, but by a vibration damper 20 connecting the chassis 10 and the optical table 30, preferably configured as an active system comprising, for example, air springs 22.

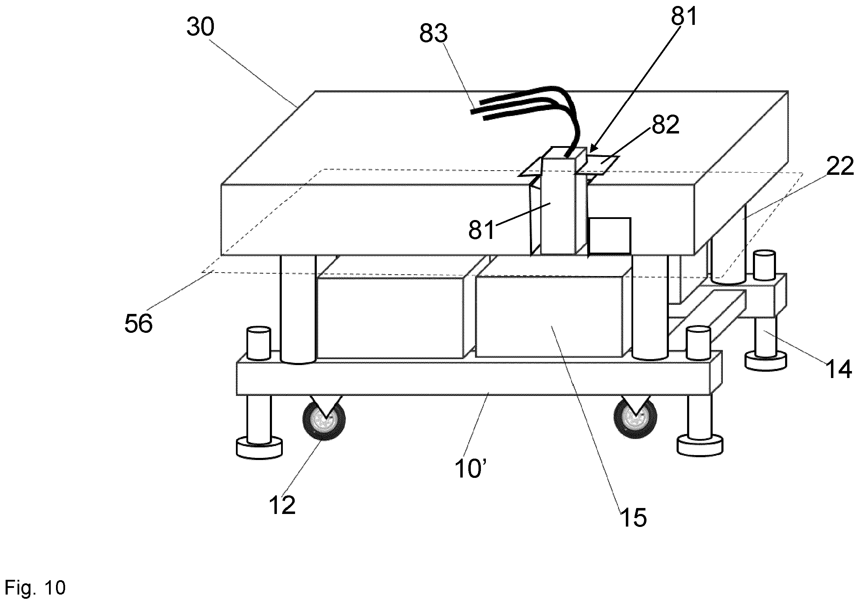

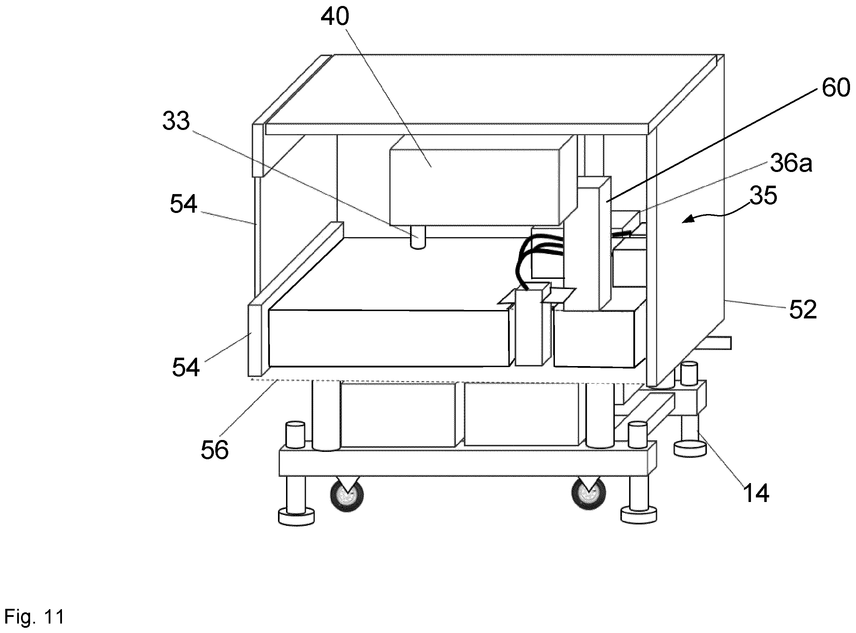

The frame 10' of the chassis 10 holds the at least one laser 35 shown later, the control system 16 and the power supply unit 15 required to operate the elements of the microscope 100, as well as a significant portion of cables 83 required, as can be observed in Figures 10 and 11. For the microscope 100, the spatial arrangement of the individual elements is essential because it ensures both compactness - the ability to pass through doors of a given size without disrupting the device - and thermal stability, i.e. that the heat generated by each element does not overheat the individual units. The spatial arrangement of the elements on the chassis 10 is the result of targeted mechanical design work, with maximum enclosure size and thermal balance as the target parameters. In one possible embodiment, the control system 16, preferably configured as a desktop computer, is located in a slide-out compartment 17. The compartment 17 is pushed in until it abuts when moving the microscope 100 to meet the need for minimum lateral dimensions to fit through the doors. During operation, the compartment 17 of the control system 16 can be pulled out for convenient access to the top-mounted sockets and standard control buttons.

Attached to the chassis 10, the optical table 30 serves as the base support for the sensitive optical part of the microscope 100. In a particularly preferred embodiment, the optical table 30 implements passive vibration damping through its structure, for example by the optical table 30 comprising a plurality of layers, for example two thicker steel plates and thin-walled cells 30' arranged therebetween in a honeycomb form. This structure ensures passive vibration damping, i.e. that the resonant frequency of the optical table 30 falls outside the typical vibration frequency range of buildings and furniture (4-100 Hz), typically much higher. Thus, it does not transmit ambient vibrations to the optical elements and other components of the microscope 100. The composite structure not only does not resonate to ambient vibrations, but also damps (attenuates) vibrations generated and propagating on the optical table 30.

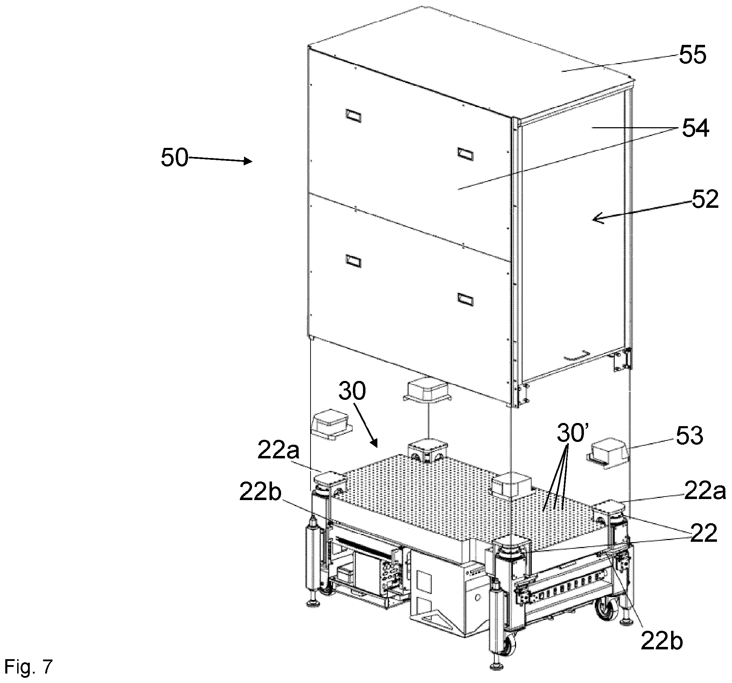

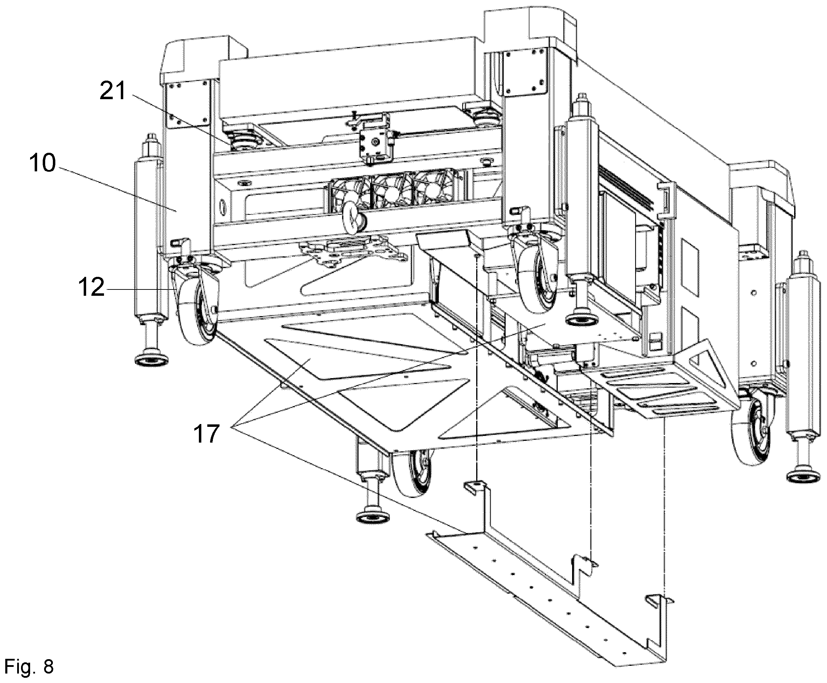

The isolation from ambient vibrations is provided by the active vibration damper 20, which, in addition to the passive stage damping, attaches the optical table 30 to the chassis 10, i.e. the optical table 30 is connected to the chassis 10 via the vibration damper 20, for example the air springs 22 mentioned above. The vibration damper 20 is preferably provided with air springs 22 configured as legs. In the embodiment illustrated in Figures 9-11, the active vibration damper 20 comprises four air springs 22, three of which have independently adjustable heights, i.e. three degrees of freedom to adjust the plane of the optical table 30. The control system (not shown in the drawing) releases air into a small reservoir on each height-controlled air spring 22 through a tri-stage valve (not shown in the drawing), thus always aiming to maintain the set height. Preferably the valves are fed by air inlet pipes known to the skilled person and preferably the air inlet pipes have a variable degree of throttling. In the present embodiment, the air springs 22 have support profiles 22a having a lower support flange 22b supporting the optical table 30 (see Figure 7). In this way, the optical table 30 can be recessed between the air springs 22, thereby further reducing the vertical size of the microscope 100. In addition, in a preferred embodiment, additional spring dampers 21 (see Figure 8) may be provided underneath the optical table 30 to dampen the wobble or jolting during transport, reducing the load on the air springs 22.

The control frequencies of the air springs 22 are much lower than the ambient frequencies, and are not comparable to the optical adjustment and measurement times. While the active vibration damper 20 system only allows very low frequency <1 Hz vibrations to pass, the passive damping of the optical table 30 would only resonate at high frequencies >100 Hz, so the vibration band is limited in both directions, amplifying the effect of each other. Effective vibration damping ensures stability of the laser beams during focusing, with mechanical precision up to ten times higher (50 nm) than the diffraction limit by limiting random displacements between the focal spot and the sample.

The amount and speed of air required to control the height of the air springs 22 affects the stability and statics of the entire microscope 100. With a lower air injection rate, the static centre of gravity of the whole system can be placed higher, as it will wobble with lower amplitude and velocity during the control. For example, the speed of the air admitted to the control system can be adjusted by a throttle valve so that the entire microscope 100 remains stable and does not wobble - the controller will then only make the necessary slowed-down correction. The centre of gravity of the microscope 100 is located above the optical table 30, but with the right throttle , the wobble caused by a high centre of gravity can be completely eliminated.

One or more lasers 35, 35a, 35b are fixed to the optical table 30. The design of the box of the lasers 35a, 35b selected for the compact microscope 100 is preferably such that it also includes an externally controllable dispersion compensation element capable of compensating for the wavelength-dependent second order group delay dispersion of the microscope 100 in the order of 50.000 to 80.000 fs². The dispersion compensation ensures that the shortest possible pulses capable of optimally generating two-photon excitation are applied to the sample, and that their dispersion-induced time elongation in the sample plane is minimised.

The light from one or more lasers 35a, 35b is transmitted through beam path 36 to the objective 33. In the context of the present invention, beam path 36 is understood to be a path for the laser beam defined by one or more optical elements (e.g., mirrors T, lenses, beam splitters, etc.). Beam path 36 includes lower beam path section 36a, middle beam path section 36b, and upper beam path section 36c. Lower beam path section 36a is preferably within a shielding box to prevent scattered laser light from entering the measuring space. Elements of the lower beam path 36a may be connected to the optical table 30 or may be arranged in a separate dedicated unit, if desired. The elements of the lower beam path 36a may comprise: one optical power adjuster 92a, 92b per laser 35a, 35b and one primary beam expander 93a, 93b for enlarging the beams of the lasers 35a, 35b to a diameter of 4.5 to 5 mm. The beam expanders 93a, 93b are fitted to each of the lasers 35a, 35b, and the diameter of the laser beams also differs when exiting the lasers 35a, 35b. The optical power adjusters 92a, 92b comprise a combination of a motor-rotatable half-wave plate 92a', 92b' and a polarized light transmitting beamsplitter cube 92a", 92b", which together control how much light passes through the beamsplitter cube 92a", 92b" and how much is reflected. In particular, at the time of alignment or servicing, it is necessary to reduce the light output precisely over the entire length of the laser beam. During normal operation, the optical power adjusters 92a, 92b are set to maximum transmission, the power control is performed by an acousto-optical scanning head 42 by tuning the diffractive acoustic power, which will be discussed in detail later.

The optical table 30 is mounted on pillar 60 supporting the upper optical box 40. As one of the main functional elements of the microscope 100, the pillar 60 has a multifunctional role. On the one hand, it provides mechanical support and stability to the components placed above it, and on the other hand, its hollow interior is the light path from the lasers 35a, 35b to the upper optical box 40 performing stabilisation, beam expansion, scanning and patterning. To provide mechanical stability, the wall of the pillar 60 on the side connected to the upper optical box 40 is preferably formed from a thick metal plate (e.g. steel or aluminium) with holes, dimensioned to securely support the heavy elements attached to it and to allow minimal oscillation and vibration.

In the present embodiment, the microscope 100 includes a beam stabilizer 38 according to the invention for stabilizing the beam of at least one laser 35. The beam stabilizer 38 comprises a reference beam extraction element 70, such as a polarizing beamsplitter cube, arranged in the upper beam path section 36c, and a downstream beam splitter 70'.

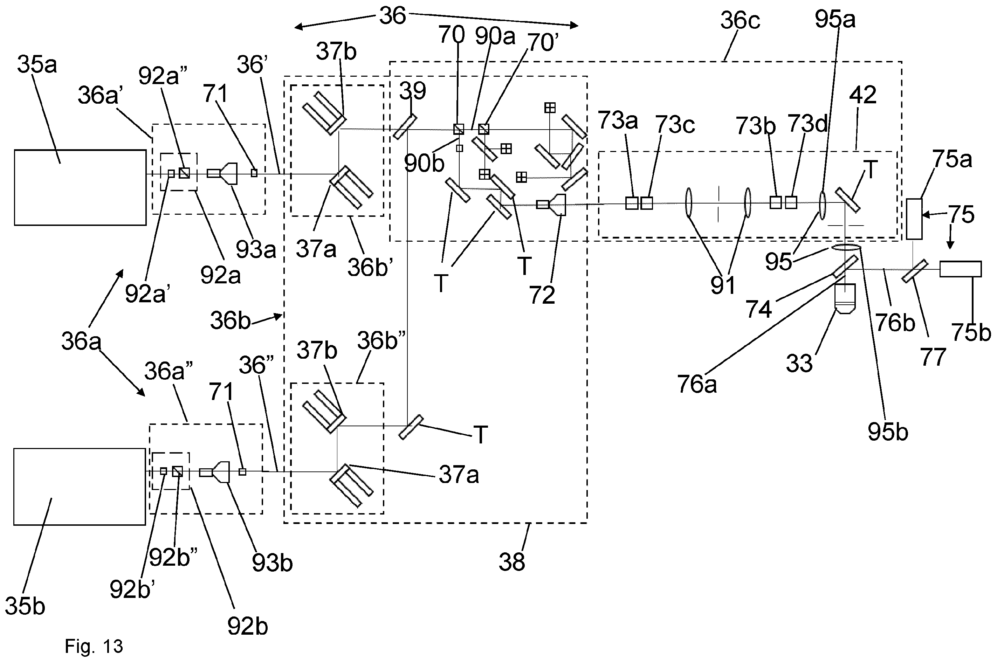

In the embodiment shown in Figure 13, comprising first and second lasers 35a, 35b, the optical beam path 36 has first and second branches 36', 36" upstream of the upper beam path section 36c such that the first branch 36' comprises a first lower beam path section 36a' guiding the beam of the first laser 35a into the pillar 60 and a first middle beam path section 36b' guiding the first laser beam into the upper optical box 40 in the pillar 60. In the second branch 36", there is a second lower beam path section 36a" guiding the beam of the second laser 35b into the pillar 60 and a second middle beam path section 36b" guiding the second laser beam into the upper optical box 40 in the pillar 60, and a dichroic coupling element 39, preferably a dichroic mirror, is arranged upstream of the upper beam path section 36c coupling the first and second laser beams. The coupling element 39 transmits the wavelength of one laser 35a, 35b and reflects the wavelength of the other laser 35b, 35a. In a possible embodiment, a half-wave plate 71 for adjusting the amount of beam extraction of the extraction element 70 is arranged in the lower beam path section 36a of the optical beam path 36 upstream of the extraction element 70. It is noted that in embodiments comprising two lasers 35b, 35a, the first lower beam path section 36a' and the second lower beam path section 36a" preferably each comprise a half-wave plate 71, as can be seen in Figure 13.

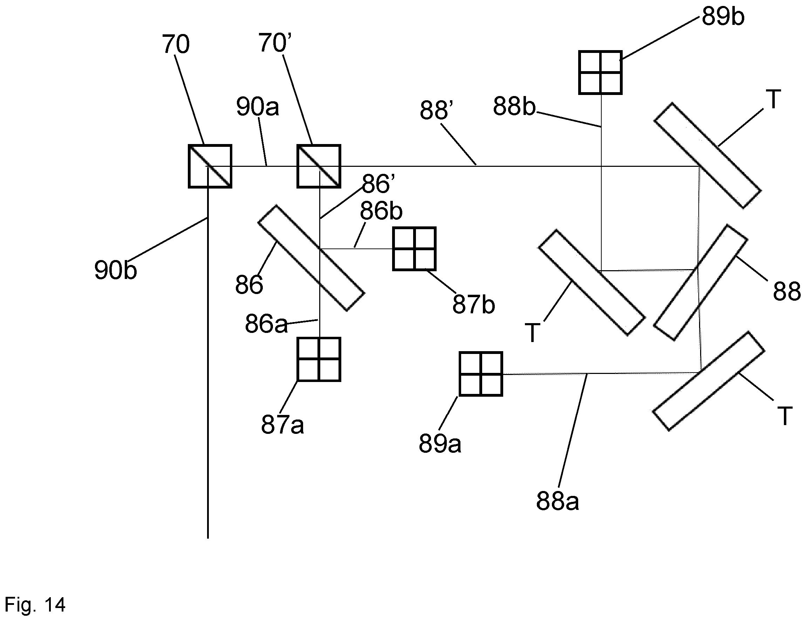

The reference beam extraction element 70 defines a reference beam path 90a and a main beam path 90b. In a particularly preferred embodiment, the beam stabiliser 38 comprises first and second reference beams 86', 88' obtained by splitting the reference beam path 90a in two, the starting point of which is the reference beam splitter 70'. That is, the reference beam path 90a is split into first and second reference beam paths 86', 88' by the beam splitter 70'. The first reference beam path 86' is routed to at least one near first detector 87a, 87b, which is sensitive to beam position, and the second reference beam path 88' is routed to at least one distant second detector 89a, 89b, which is sensitive to beam position. The detectors 87a, 87b and the detectors 89a, 89b form detector pairs. In the embodiment shown in Figures 13 and 14, the distance of the at least one near first detector 87a, 87b along the first reference beam path 86' from the reference beam splitter 70' is less than the distance of the at least one distant second detector 89a, 89b along the second reference beam path 88' from the reference beam splitter 70'. In this way, the near first detectors 87a, 87b can be used to detect the beam position error, while the distant second detectors 89a, 89b can be used to detect the beam direction error. It is clear that instead of placing the distant detectors 89a, 89b further away, other known optical methods can be used to provide enhanced sensitivity of the detectors 89a, 89b to the beam direction, for example by placing a focusing lens in front of each of the detectors 89a, 89b. In this case it is not necessary that the detectors 89a, 89b are further along the beam path from the beam splitter 70' than the detectors 87a, 87b, so physically we cannot necessarily speak of a "distant" detector and a "near" detector in comparison. Hereinafter, "near" or "first" detectors are understood to mean detectors 87a, 87b configured to detect the beam position, while "distant" or "second" detectors are understood to mean detectors 89a, 89b configured to detect the beam direction, whether or not the latter are located further along the second reference beam path 88'. Thus, the arrangement (position, distance from the laser source) of the detectors 87a, 87b, 89a, 89b, their interaction with other optical elements and the use of the measurement signals they provide are the basis for the discussion of the function for which each detector 87a, 87b, 89a, 89b is configured. Note that each of the 87a, 87b, 89a, 89b detectors could be used for either position detection or beam direction detection, their arrangement (optionally using other optical elements such as lenses) implies that the "near" 87a, 87b detectors are more sensitive to position error, while the "distant" 89a, 89b detectors are more sensitive to beam direction error.

The extraction element 70, designed as a polarizing beamsplitter cube, forms a power adjuster with the half-wave plates 71 to precisely control the amount of low-intensity light extraction to the detectors 87a, 87b, 89a, 89b of the beam stabiliser 38.

In the embodiment illustrated in Figure 14, a first dichroic mirror 86 is arranged in the first reference beam path 86' to divide the first and second laser beams, which further divides the first reference beam path 86' into a first reference branch 86a for the first laser beam and a second reference branch 86b for the second laser beam. In this embodiment, the beam position sensitive first detectors 87a, 87b are arranged at the ends of the first and second reference branches 86a, 86b. Similarly, in the second reference beam path 88', a second dichroic mirror 88 is arranged to divide the first and second laser beams, which further divides the second reference beam path 88' into a third reference branch 88a formed for the first laser beam and a fourth reference branch 88b formed for the second laser beam. The beam direction sensitive second detectors 89a, 89b are arranged at the ends of the third and fourth reference branches 88a, 88b such that the beam paths from the reference beam splitter 70' to the near first detectors 87a, 87b are shorter than the beam paths from the reference beam splitter 70' to the distant second detectors 89a, 89b.

The beam stabilizer 38 preferably further comprises a movable lower mirror 37a and an upper mirror 37b each having a controllable moving mechanism arranged in the at least one middle beam path section 36b, and a control unit (not shown) for moving the movable lower mirror 37a and the movable upper mirror 37b based on signals detected by at least one near detector 87a, 87b and the at least one distant detector 89a, 89b via control of the moving mechanisms. In a preferred embodiment, the lower and upper 37a, 37b mirrors provided with the controllable moving mechanism are configured as controllable motorized mirrors, and the near and distant detectors 87a, 87b, 89a, 89b are quadrant detectors known to the skilled person.

The design of the beam stabiliser 38 is optimised to compensate for as much mechanical instability as possible and to minimise the displacement or angular rotation of the beam as close as possible to the point of use. To do so, the position sensitive detector pairs 87a, 87b; 89a, 89b are mounted close to the scanning unit, both pairs being arranged in the upper optical box 40 to compensate for the mechanical displacement of the upper optical box 40 relative to the rest of the microscope 100, pillar 60, lower mounting plate, with respect to the beam.

In the middle beam path section 36b, for guiding the light, the mirrors 37a, 37b are positioned on the inside of the wall of the pillar 60 at an angle of 45° to the beam of the lasers 35a, 35b, which guide the light vertically upwards, parallel to the axis of the pillar 60, deflected by 90°. These are motorized movable mirrors 37a, 37b for the beam of both lasers 35a, 35b. The motorized mirrors 37a, 37b, in addition to guiding the beam upward, are also used to keep the center of the beam centered on the position-sensitive detectors 87a, 87b, 89a, 89b, which serve as reference, by means of a motor control signal provided by a control circuit. In the beam stabilizer 38, both laser beams (of a given wavelength) pass through a beam stabilizing control loop formed by two mirrors 37a, 37b, each motorized to move (tilt) in two perpendicular directions, and two optically aligned detectors 87a, 87b, 89a, 89b, position sensitive along two perpendicular axes.

The second detectors 89a, 89b of both control loops are installed directly in front of (next to) the entrance to the common scanner. The motorized lower mirrors 37a are mounted on the inner wall of the lower part of pillar 60, so that the pillar 60 provides a long beam path for fast iteration of the control loop between the lower mirrors 37a and the position-sensitive detectors 87a, 87b. The motorized upper mirrors 37b are already located at the entrance of the upper optical box 40 and are used to adjust the position of the light beam on the detectors 89a, 89b located close to the scanner. The beam adjustment with the lower mirrors 37a and the near detectors 87a, 87b and the beam adjustment with the upper mirrors 37b and the distant detectors 89a, 89b are performed iteratively for each wavelength laser beam separately. The length of the pillar 60 - i.e. the distance between the motorized mirrors 37a, 37b - helps to ensure a fast convergence of the stabilization iteration. Keeping the beam direction accurate is helped by the large distance between the upper motorized mirror 37b and the distant detectors 89a, 89b. Again, it is noted that instead of choosing this spacing to be large, other optical methods may be used to provide increased sensitivity of the detectors 89a, 89b to the beam direction, for example by placing a focusing lens in front of each of the detectors 89a, 89b as known to the skilled person. The motorized upper mirrors 37b are preferably arranged on a support extending from the upper optical box 40 along the pillar 60 in or above the pillar 60: they thus receive the light beams from the pillar 60 and direct them into the upper optical beam path section 36c.

The compact and goal-oriented solution is based on coupling the two laser beams of different wavelengths, after the two beam stabilisation control loops, by means of a wavelength-dependent reflection coupling element 39, such as a special mirror, and then passing them through a beam expander 72, an acousto-optical scanning system, imaging optics and focusing objective 33 until they reach the sample. The arrangement allows simultaneous excitation of the sample with both laser beams and rapid wavelength changes without moving mechanical elements, using purely electrical control as required for the application. It is noted that the acousto-optical scanning head, which is common to both excitation beams, does not contain any moving mechanical elements and therefore allows at least an order of magnitude higher scanning speed and focal spot scanning along three dimensions (x, y, z) than mirror scanners.

In a possible embodiment, a shared triple-magnification beam expander 72 is arranged at the input of the upper optical box 40 downstream of the beam combining wavelength-selective coupling element 39 to provide a beam diameter matching the acousto-optic deflectors 73a-73d, preferably, for example, 15 mm. The beam expander 72 is arranged in the optical beam path 36 downstream of the reference beam extraction element 70 in the main beam path 90b as part of the beam stabilizer 38, and is capable of magnifying laser beams of different wavelengths along a precisely common axis without chromatic aberration.

The optical functions of the upper optical box 40 include providing a position-sensitive reference in the excitation beam stabilization circuits, beam expansion of the excitation beams scanning and guiding of the excitation beams to the sample, and guiding reflected light from the sample to an optional camera. The mechanical frame of the upper optical box 40 is provided by a base plate 44, preferably in the form of a high thickness metal plate (e.g. steel plate or aluminium plate), possibly in the form of an optical support plate with an internal vibration damping honeycomb structure, preferably with mechanical support elements mounted on both sides thereof for supporting and moving each optical element. Preferably, at least the optical elements of the beam stabilizer 38 other than the movable mirrors 37a, 37b are also mounted on one side of the base plate 44, and the optical elements of the scanning head 42 are mounted on the other side of the base plate 44. The optical beam path 36 is guided from the beam splitter 70' through an aperture formed in the base plate 44 into the scanning head 42.

In the upper optical box 40 is arranged the aforementioned scanning head 42, comprising first and second acousto-optical deflectors 73a, 73b deflecting along the X-Z plane and third and fourth acousto-optical deflectors 73c, 73d deflecting along the Y-Z plane, where the X-Z plane is the first plane parallel to the optical axis of the objective 33 and the Y-Z plane is the second plane parallel to the optical axis of the objective 33 and perpendicular to the X-Z plane. Preferably, the scanning head 42 comprises a telecentric relay 91 configured, for example, as an afocal telescope known to the skilled person, such that the first and third acousto-optical deflectors 73a, 73c are arranged upstream of the telecentric relay 91 and the second and fourth deflectors 73b, 73d are arranged downstream of the telecentric relay 91 along the beam path 36. Preferably, the amplifier (not shown in the figures) for the radio frequency control signals of the four acousto-optical deflectors 73a-73d is also arranged in the middle of the upper optical box 40, thus providing short and well shielded cables to the shielded acousto-optical deflectors 73a-73d to deliver the signals having a power of several watts. This has the advantage of minimizing the antenna effect, the short cables do not resonate with the RF signal, and there is less loss.

In a preferred embodiment, the exit plane of the scanning head 42 is projected by a chromatic aberration-free telescope system 95 onto the rear aperture of the objective 33, which also focuses without chromatic aberration on the sample. A first lens 95a (scanning lens) of the telescope system 95 is located in the upper optical box 40, a second lens 95b (tube lens) and the objective 33 are located in the microscope module 32.

The microscope module 32 can be arranged, for example, on the optical table 30, but an embodiment can also be conceived in which it is integrated with the upper optical box 40. The advantage of the separate design is that the upper optical box 40, mounted on the support pillar 60, can be placed over a conventional microscope, which serves as the microscope module 32. Preferably, the microscope module 32 comprises at least one detector 75, and at least one dichroic mirror 74 that transmits the at least one laser beam and reflects visible light. In the microscope module 32, the scanning beam path 76a and the detection beam path 76b forming part of the optical beam path 36 are configured such that the at least one laser beam transmitting and visible light reflecting dichroic mirror 74 is arranged in the scanning beam path 76a upstream of the objective 33, and the detection beam path 76b is formed between the at least one dichroic mirror 74 and the at least one detector 75. In the embodiment illustrated in Figure 13, the microscope module 32 comprises a plurality of detectors 75a, 75b preferably arranged perpendicular to each other, and the detection beam path 76b is divided by the dichroic mirror 77 into a plurality of detection branches corresponding to the wavelength to be detected, at the ends of which a detector 75a, 75b is arranged from each of the plurality of detectors 75a, 75b.

In conventional microscopic observation, the signal reflected from the sample passes through the objective 33 in the microscope module 32 and the second lens 95b to reach the upper optical box 40, in which the first lens 95a and a camera-lens pair image it onto a camera. When switching between the laser microscope mode and the conventional microscope mode, a motor inserts a mirror into the beam path, which blocks the excitation laser beams and transmits the beam from the first lens 95a to the camera lens and through it to the camera.

The microscope module 32 has the following functions:
- to deliver the excitation laser beam to the sample, i.e. to focus it, by means of the objective 33,
- to separate the fluorescent beams from the excitation beam, to split them into different wavelength ranges and to detect them by means of dichroic mirrors 74, 77 and detectors 75a, 75b,
- to provide illumination for conventional microscopic examination, preferably by means of LED 96 illumination,
- and preferably providing a non-laser light source and beam path for optogenetics.

For the two-photon neural activity measurement, the excitation laser light is transmitted by the second lens 95b from the upper optical box 40 to the objective 33, which focuses it on the sample. The fluorescent light generated during the excitation is guided back by the objective 33, and is separated from the excitation beam by a dichroic mirror 74 with wavelength-dependent reflection and guided towards the detectors 75a, 75b. The beam containing the fluorescent light extracted from the central beam path is split into two wavelength bands by the dichroic mirror 77 with wavelength-dependent reflection and detected by two (or more, if required) detectors 75a, 75b, for example photomultiplier detectors.

The conventional microscopic sample observation in the upper optical box 40 is primarily suitable for sample alignment, selection of areas to be measured and adjustment of focal planes. The conventional microscopic beam path includes LED illumination 96 mounted on the arms supporting the detectors 75a, 75b, the light of which is coupled in a known way, e.g. by means of a sliding mirror, to the beam path defined by the axis of the objective 33, so that in this mode the mirror (glass plate), which is inserted into the beam path by a motorised actuator, reflects part of the collimated light of the LED 96 lights onto the objective 33. The size of the illuminated sample area is set by the field of view of the objective 33. The light reflected from the sample passes through objective 33 and the second lens 95b and returns to the upper optical box 40, where it is imaged onto the camera inappropriate size by the camera lens. The appropriate magnification between the field of view of the objective 33 and the camera sensor is precisely set by the imaging optical system.

In one possible embodiment, the camera image is displayed on the screen of the control system 16 (e.g. desktop computer). Switching between a conventional microscope and a laser beam path can be done, for example, by simultaneously pulling out and pushing in a motorised beam path mirror in the upper optical box 40 and a motorised 45° reflecting mirror in the microscope module 32, respectively. By using the motor to push the mirrors out of the beam path, the light from the objective 33 enters the camera unobstructed. Conventional microscopic imaging is achieved when the light from the LED illumination 96 reaches the sample and is reflected back therefrom. For example, the light from the LED illumination 96 can be coupled to the sample by means of a mirror which reflects at an angle of 45° and which can be mechanically removed from the beam path by hand or by a motor.

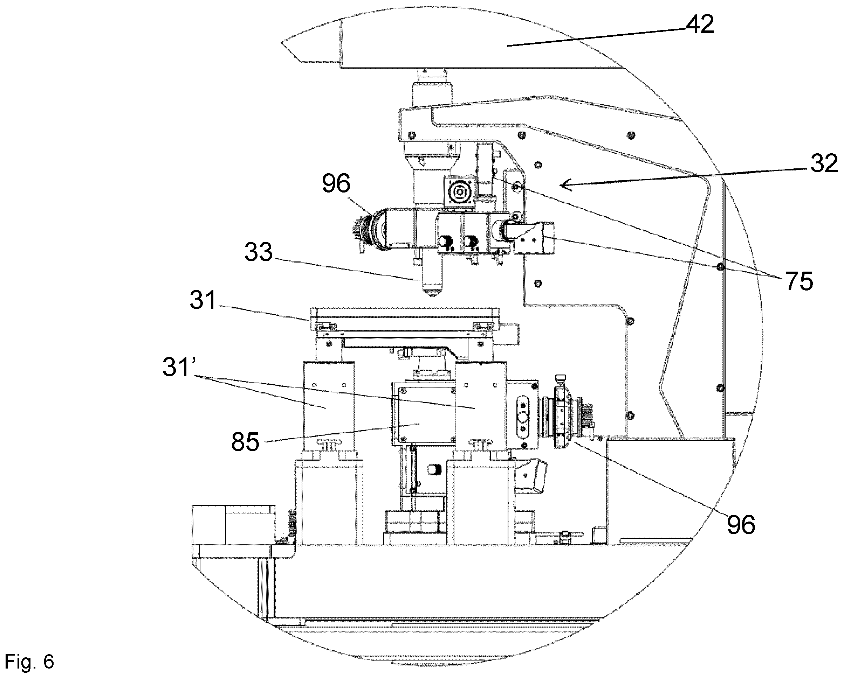

The stage 31, which acts as a user interface, provides the functionality of the microscope 100, i.e. the insertion, movement and optimal positioning of the sample under the objective 33. In a preferred embodiment, the stage 31 is motorized for movement and preferably rests on legs 31' as shown in Figure 6. The legs 31' allow for placement of various components under the stage 31. For example, in some embodiments, a detection unit 85 for detecting light passing underneath the stage 31 may be arranged on the optical table 30. The microscope 100 can be used for both in vivo and in vitro sample examination. In the latter case a sample holding chamber (not shown) is required to keep the sample alive. Likewise, for in vivo measurements, several types of animal holding racks can be used, as is known to the person skilled in the art. The mechanically required space is provided by the mechanical design of the microscope 100, in particular the relative positioning of the pillar 60 and the upper optical box 40. The preferred arrangement and mechanical design of the pillar 60 and the upper optical box 40 ensure optimal and convenient usability of the microscope 100 for the user.

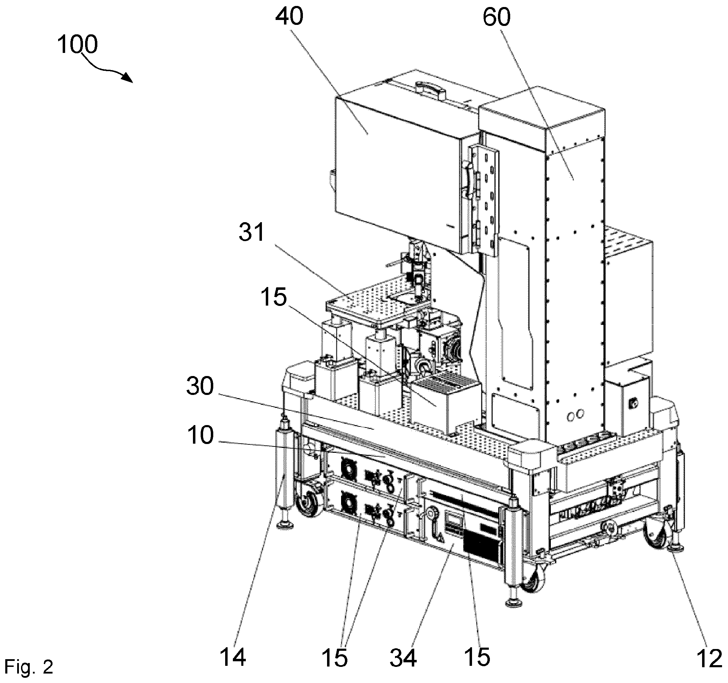

The advantageous design of the microscope 100 includes the optimal placement of the necessary cables 83 and tubes. It requires a large amount of space to connect power supplies 15 and cooling devices 34 located on the chassis 10 to acousto-optical amplifiers and devices located in the upper optical box 40. In an exemplary embodiment, cooling water is effectively piped upstream from the four acousto-optic deflectors 73a-73d in series and downstream to the cooling device 34 by connecting the four acousto-optic deflectors 73a-73d in series; the pipes connect the connectors arranged in the chassis 10 to the water connectors located on the upper optical box 40. In the embodiment shown in Figure 2, the cooling device 34 is arranged in the chassis 10, but embodiments are also conceivable in which the cooling device 34 is arranged on a unit separate from the microscope 100, to reduce noise and resonance.

The short cables carrying the radio frequency signal connecting the amplifiers to the acousto-optic deflectors 73a-73d are inside the upper optical box 40, while the cables 83 carrying the signals from the power supply 15 and the control system 16 run outside the upper optical box 40 and enter the inside of the upper optical box 40 via dedicated connectors, without interfering with the laser beam path anywhere. The electrical and optical cables 83 (and possibly cooling tubes) on the chassis 10 connecting the power supplies 15 for operating the lasers 35a, 35b to the lasers 35a, 35b on the optical table 30 are routed through a purpose-specific, preferably U-shaped cutout 81 in the optical table 30. This does not affect the vibration separation and attenuation parameters. The vibrations transmitted by the cables 83 to the optical table 30 are attenuated by the optical table 30 using the active and passive vibration attenuation mechanisms described previously.

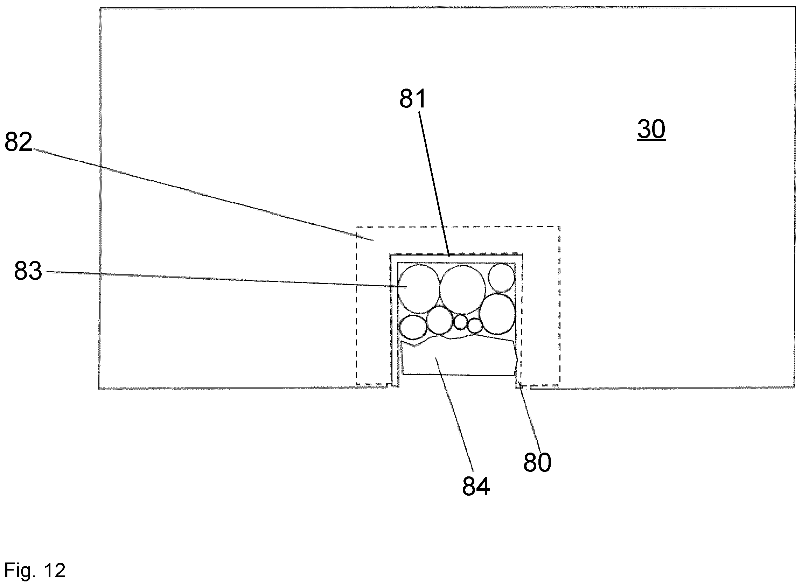

In order to shield the measuring space, the microscope 10 is equipped with a light barrier system 50. The light barrier system 50 comprises an external cover 52 enclosure that is externally attachable to the chassis 10 (optionally to the optical table 30), comprising side plates 54 and a lid 55, as can be seen, for example, in Figure 7. The cover 52 of the light barrier system 50 may be attached directly or indirectly to the chassis 10 such that it is only indirectly in connection with the optical table 30 via the vibration damper 20. To provide access to the measuring space, at least one of the side plates 54 is preferably configured to be easily removable or displaceable, for example in a retractable manner. In a possible embodiment, the light barrier system 50 comprises a lower light blocking foil 56 preferably made of plastic, arranged between the chassis 10 and the optical table 30, to block light from the chassis 10. In order to prevent light interference from leaking in when passing through the cables 83 required for the operation of the microscope 100, in a preferred embodiment, the cables 83 are encased in a cable duct 80 connecting the upper side of the optical table 30 to the lower side of the optical table 30, the cable duct 80 being arranged in the cutout 81 of the optical table 30. In the cable duct 80, a light sealing material 84 (such as foam) is arranged between the cables 83. A gap is formed between the wall of the cable duct 80 and the cutout 81 of the optical table 30, and a flexible light sealing collar 82 is formed between the wall of the cable duct 80 and the edge of the cutout 81 on at least one side of the optical table 30, which collar is folded back onto the wall of the cable duct 80 and the side of the optical table 30 and covers the gap, as shown, for example, in Figures 10 or 12. In a preferred embodiment, the light barrier may be further enhanced by the use of light barrier caps 53 arranged over the air spring 22 and the support profile 22a of the optical table 30 (see Figure 7).

Electronics boxes 94 on the side of pillar 60 contain most of the electronic control cards (not shown in the figures), which control, for example, acousto-optical deflectors 73a-73d and detectors 75a, 75b. The cables, linking the signals from the detectors 75a, 75b to the cards, connect the microscope module 32 and the electronics box 94 via connectors. Likewise, the cables driving and controlling the various motors driving the Z-axis motor of the objective 33, the motor driving the mirror reflecting the excitation laser beams into the beam path of the objective 33, the motors driving the beam stabilizing mirrors 37a, 37b, and the motor driving the mirror of the conventional light source are also connected via connectors in an ergonomic design from the cards to the target motors.

The acousto-optical scanner, which can operate simultaneously in two wavelength ranges, is one of the most important innovations of the microscope 100. It has the advantage of allowing the simultaneous or sequential optical excitation and examination of two different biological processes on a sample. It is the combination of optical stimulation or inhibition of nerve function - optogenetics - and nerve function measurement based on two-photon fluorescence that is the most widespread and useful application of two different wavelengths of laser. Acousto-optical deflectors 73a-73d keep the two different wavelength laser beams in different acoustic frequency ranges on the scanning axis. The two optical wavelength ranges can therefore be chosen such that the corresponding acoustic frequency ranges do not overlap and only one wavelength at a given acoustic frequency is deflected at the correct angle and reaches the correct target area. This is an important engineering design task, to ensure complete elimination of crosstalk.

The switch between the two functions (stimulation and inhibition) is achieved by the scanner simply by switching the acoustic frequencies, in a completely electronic way, by generating the corresponding electronic control functions. This means that the switching is performed at high speed and without generating mechanical vibrations that potentially disturb the sample or the measurement, but simultaneous excitation is also possible by simultaneous application of the corresponding acoustic frequencies, since the crosstalk is minimised. In this case, the total acoustic power that an acousto-optic deflector 73a-73d can tolerate is divided between the two frequency ranges, so that the efficiency at both optical wavelengths will be lower.

Note that in point-scanning mode, the switching time between any two points in the 3D range scanned on the sample is the acoustic wave passage time through the apertures of the acousto-optical deflectors 73a, 73d (typically 21 µs), but in continuous motion along any 3D straight or curved line, the focal spot can be moved continuously at higher speeds. Thereby, the focal spot can be moved through the sample at a speed at least an order of magnitude faster than conventional mirror scanners.

The scanning head 42 of the microscope 100 can move the focal spots along all three spatial coordinates with equal speed and efficiency within the 3D range to be targeted - the edges of the 3D range being determined by the angular range of the scanning acousto-optical deflectors 73a, 73d, i.e. the maximum acoustic frequency bandwidth. From an optical point of view, the scanning head 42 focuses the two beams of different wavelengths into the same three-dimensional domain with a minimum aiming inaccuracy error of only one tenth of the diffraction limit between the two optical wavelengths, i.e. it can focus the two beams on the same sample set with an accuracy of 50 nm. This is of particular importance for optogenetic experiments, where the position of the optical beam stimulating neural activity relative to the dendrite requires a more precise adjustment than the diffraction limit to optimise the excited signal and thus the position of the readout beam relative to the excitation beam must be much more precise and stable than the diffraction limit. This is achieved, in addition to minimising optical errors, by beam stabilisation and vibration isolation, by generating electronic control functions with 16-bit depth and very low digitisation error.

The mobile laser scanning microscope 100 has the following advantages. A built-in beam stabilizer 38 allows rapid post-transport set-up of optical subsystems, such as the acousto-optical scanning head 42, which are highly sensitive to the position of the input light. This allows the optical path to be self-adjusting, so that imaging is performed with a spatial resolution of up to 50 nm. The optical and electro-optical elements of the microscope 100 assembly are fixed in a pre-set position, so that the microscope 100 assembly can be unpacked, packed and operated in a few tens of minutes. The simplicity of installation means that it can be operated by a single person. The light blocking foil 56 underneath the optical table 30 provides light blocking, and together with the cover 52, can form a hermetic light blocking enclosure for high sensitivity measurements (e.g. photon counting). After being rolled, the optical table 30 can be raised to the required height (e.g. approx. 30 cm) by means of legs 14. Thanks to its compact size, the microscope 100 of the invention can fit into elevators and through standard doors, which typically have a door opening larger than 70 x 200 cm. Despite the high superstructure, it does not resonate due to the throttled air technique.

It is clear that alternative embodiments to those disclosed herein may be envisaged by the skilled person, but within the scope of protection defined by the claims.

## Claims

1. A beam stabilizer (38) for a scanning microscope (100) comprising a first laser (35a) for producing a first beam having a first wavelength and a second laser (35b) for producing a second beam having a second wavelength, **characterized in that** it comprises:
movable mirrors (37a, 37b) arranged in the path of the first laser beam and the second laser beam, each provided with a pair of controllable moving mechanisms,
a dichroic coupling element (39), preferably a dichroic mirror, arranged downstream of the pairs of movable mirrors (37a, 37b) for coupling the first and second laser beams,
a reference beam extraction element (70) arranged in the optical beam path of the coupled laser beam,
a reference beam splitter (70') arranged downstream of the reference beam extraction element (70), defining first and second reference beam paths (86', 88'), the starting point of which is the reference beam splitter (70'), and
a first dichroic mirror (86) is arranged in the first reference beam path (86') separating the first and second laser beams, the first dichroic mirror (86) dividing the first reference beam path (86') into a first reference branch (86a) for the first laser beam and a second reference branch (86b) for the second laser beam, and at the end of each of the first and second reference branches (86a, 86b) a first detector (87a, 87b) configured for beam position detection is arranged,
a second dichroic mirror (88) is arranged in the second reference beam path (88') separating the first and second laser beams, which divides the second reference beam path (88') into a third reference branch (88a) for the first laser beam and a fourth reference branch (88b) for the second laser beam, and at the end of each of the third and fourth reference branches (88a, 88b) a second detector (89a, 89b) configured to detect the beam direction is arranged,
further comprising a control unit for moving the lower and upper movable mirrors (37a, 37b) through the control of the moving mechanisms based on the signals detected by the first detectors (87a, 87b) and the second detectors (89a, 89b).

2. The beam stabiliser (38) according to claim 1, **characterised in that** the lower and upper movable mirrors (37a, 37b) with controllable moving mechanism are controllable motorised mirrors.

3. The beam stabilizer (38) according to claims 1 or 2, **characterized in that** the reference beam extraction element (70) is a polarizing beamsplitter cube, and a half-wave plate (71) for adjusting the amount of beam extraction of the polarization splitter cube is arranged in the beam path of the lasers (35a, 35b) upstream of the polarizing beamsplitter cube.

4. The beam stabiliser (38) according to any one of claims 1 to 3, **characterised in that** the reference beam extraction element (70) defines a reference beam path (90a) and a main beam path (90b), and the beam stabiliser (38) comprises a beam expander (72) arranged downstream of the reference beam extraction element (70) in the main beam path (90b).

5. The beam stabilizer (38) according to any one of claims 1 to 4, **characterized in that** the light paths from the reference beam splitter (70') to the first detectors (87a, 87b) are shorter than the light paths from the reference beam splitter (70') to the second detectors (89a, 89b).
